# EUROPÄISCHE PATENTSCHRIFT

(11) **EP 1 305 677 B1**
(45) Veröffentlichungstag und Bekanntmachung des Hinweises auf die Patenterteilung: **07.06.2006**
(21) Anmeldenummer: 01955242.1
(22) Anmeldetag: 13.07.2001
(51) Int. Cl.: G05B 1/00

(54) **VERFAHREN ZUR FERNDIAGNOSE EINES TECHNOLOGISCHEN PROZESSES**
METHOD FOR THE REMOTE DIAGNOSIS OF A TECHNOLOGICAL PROCESS
PROCEDE DE TELEDIAGNOSTIC D'UN PROCESSUS TECHNOLOGIQUE

(30) Priorität: 28.07.2000 DE 10036971
(43) Veröffentlichungstag der Anmeldung: 02.05.2003
(73) Patentinhaber: SIEMENS AKTIENGESELLSCHAFT, 80333 München (DE)
(72) Erfinder: BROESE, Einar, 91056 Erlangen (DE); HÖHNE, Joachim, 91052 Erlangen (DE); SÖRGEL, Günter, 90455 Nürnberg (DE)
(86) Internationale Anmeldenummer: PCT/DE2001/002639
(87) Internationale Veröffentlichungsnummer: WO 2002/010866

(56) Entgegenhaltungen:
- EP-A- 0 712 060
- EP-A- 0 907 117
- EP-A- 0 936 514
- US-A- 5 566 275
- US-A- 5 598 076
- US-A- 5 671 335
- US-A- 5 838 595
- US-A- 6 041 172

## Beschreibung

Die Erfindung betrifft ein Verfahren zur Ferndiagnose eines technischen Prozesses.

Bei technologischen Prozessen, beispielsweise bei Walzwerken, konnte die Ferndiagnose bisher nur stichprobenartig durchgeführt werden. Im Wesentlichen wurden Messprotokolle und Log-Dateien des Automatisierungssystems ausgewertet. Damit konnten die Ursachen von Störungen nur eingeschränkt ermittelt werden. Eine umfassende Ferndiagnose technologischer Prozesse ist mit diesen Maßnahmen nicht möglich.

Aufgabe der vorliegenden Erfindung ist es deshalb, ein Verfahren zur Ferndiagnose eines technologischen Prozesses zu schaffen, das eine umfassende Fernüberwachung dieses technologischen Prozesses ermöglicht.

Die wird erfindungsgemäß durch ein Verfahren gemäß Anspruch 1 gelöst. Vorteilhafte Ausgestaltungen des erfindungsgemäßen Verfahrens sind jeweils Gegenstand von weiteren Ansprüchen.

Das erfindungsgemäße Verfahren zur Ferndiagnose eines technologischen Prozesses umfasst folgende Merkmale:
- Wenigstens ein realer technologischer Prozess wird durch wenigstens ein Realmodell dargestellt,
- wenigstens ein Realmodell wird mit wenigstens einem Referenzmodell wenigstens eines technologischen Referenzprozesses verglichen, wobei
- aus diesem Vergleich wenigstens eine Bewertung des realen technologischen Prozesses abgeleitet wird.

Durch den Vergleich wenigstens eines Realmodells, das wenigstens einen realen technologischen Prozess beschreibt, mit wenigstens einem Referenzmodell eines technologischen Prozesses können zeitliche Veränderungen in den zu überwachenden realen technologischen Prozess zuverlässig erkannt werden.

Zusätzlich können in vorteilhafter Ausgestaltung der Erfindung aus dem Vergleich wenigstens zweier Realmodelle miteinander die in diesen Realmodellen gespeicherten Informationen verschiedener technologischer Prozesse miteinander verglichen werden. Bei gleicher Physik müssen auch die durch die Realmodelle, die aus den betreffenden realen technologischen Prozessen gebildet wurden, zumindest ähnlich sein. Sind Abweichungen der Realmodelle untereinander zu erkennen, dann lassen sich diese den Einflussgrößen zuordnen. Dies ermöglicht eine Identifikation von Störgrößen. Bei nicht optimalem oder fehlerhaftem Verhalten der Prozesssteuerung lassen sich damit die Ursachen schneller lokalisieren. Das erfindungsgemäße Verfahren zur Ferndiagnose ist damit hervorragend geeignet, um anhand des den betreffenden realen technologischen Prozess beschreibenden Realmodells den Zustand dieses technologischen Prozesses zu beurteilen und Störeinflüsse zu identifizieren.

In vorteilhafter Weise kann wenigstens ein Realmodell und/oder wenigstens ein Referenzmodell von wenigstens einem Neuronetz gebildet (Ansprüche 3 und 4) werden.

Alternativ oder zusätzlich kann wenigstens ein Referenzmodell wenigstens ein physikalisches Modell und wenigstens ein neuronales Modellkorrekturnetz umfassen, wobei im physikalischen Modell aus wenigstens einer Eingangsgröße wenigstens eines realen technologischen Prozesses wenigstens eine Ausgangsgrö-ße gebildet wird, die vom neuronalen Modellkorrekturnetz korrigiert wird (Anspruch 6).

Im Rahmen der Erfindung ist es auch möglich, dass wenigstens ein Referenzmodell von wenigstens einem theoretischen Modell wenigstens eines realen technologischen Prozesses gebildet wird (Anspruch 5).

Sowohl das Realmodell als auch das Referenzmodell, welches aus einem realen technologischen Prozess gebildet ist, können in ihrem Langzeitverhalten analysiert werden (Ansprüche 9 und 10).

Weitere vorteilhafte Ausgestaltungen der Erfindung werden nachfolgend anhand von in der Zeichnung dargestellten Ausführungsbeispielen näher erläutert. Es zeigen in Prinzipdarstellung:
- FIG 1: ein Blockdiagramm einer ersten Ausführungsform des erfindungsgemäßen Verfahrens,
- FIG 2: ein Blockdiagramm eines Referenzmodells, das in einem zweiten Ausführungsbeispiel des erfindungsgemäßen Verfahrens eingesetzt wird,
- FIG 3: ein weiteres Ausführungsbeispiel des erfindungsgemäßen Verfahrens zur Ferndiagnose.

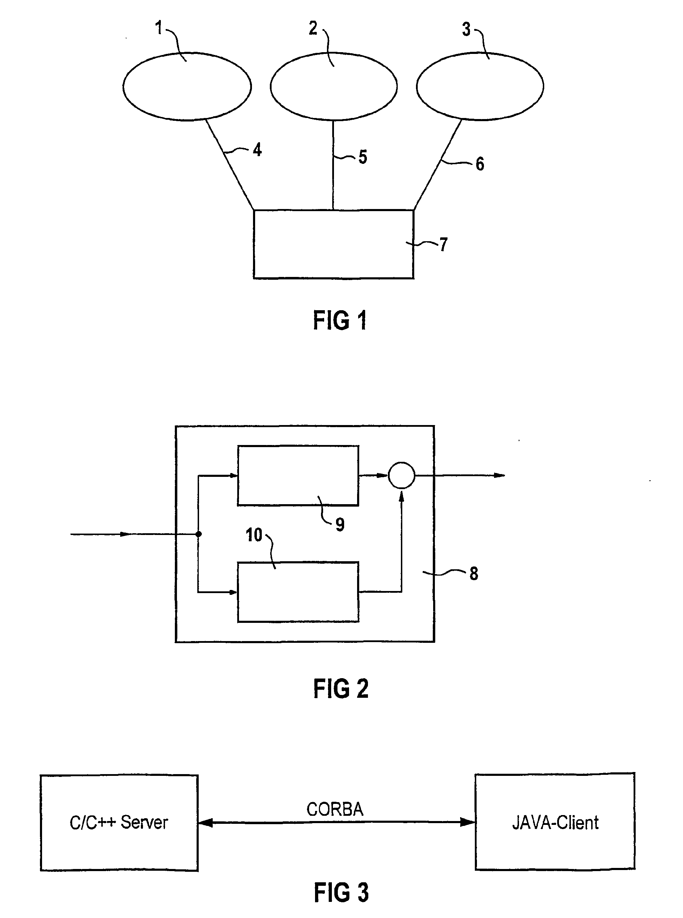

In FIG 1 ist mit 1 ein Realmodell eines ersten technologischen Prozesses bezeichnet. Das Realmodell eines zweiten technologischen Prozesses ist mit 2 bezeichnet. Weiterhin ist mit 3 das Realmodell eines dritten technologischen Prozesses bezeichnet.

Bei den in FIG 1 genannten technologischen Prozessen handelt es sich um die Prozesssteuerung bei Walzwerken.

Durch jedes der Realmodelle 1 - 3 ist jeweils die Prozesssteuerung eines Walzwerkes beschrieben. Die Realmodelle 1 - 3 werden jeweils von einem Neuronetz gebildet und sind vorzugsweise über jeweils eine ISDN-Verbindung 4 - 6 mit einem Diagnosesystem 7 verbunden, das im dargestellten Ausführungsbeispiel als Neuronetz-Diagnosesystem ausgeführt ist.

Im Neuronetz-Diagnosesystem 7 erfolgt die Bewertung der realen technologischen Prozesse durch einen Vergleich wenigstens eines Realmodells 1 - 3 mit wenigstens einem im Neuronetz-Diagnosesystem 7 abgespeicherten Referenzmodell.

Zusätzlich kann die Bewertung der realen technologischen Prozesse im Neuronetz-Diagnosesystem 7 durch einen Vergleich wenigstens zweier Realmodelle 1 - 3 miteinander vorgenommen werden. So kann beispielsweise das Realmodell 1 mit dem Realmodell 2 und dem Realmodell 3 verglichen werden und/oder das Realmodell 1 nur mit dem Realmodell 2 und das Realmodell 2 nur mit dem Realmodell 3.

Bei der Analyse der Realmodelle 1 - 3 im Neuronetz-Diagnosesystem 7 wird im vorliegenden Ausführungsbeispiel speziell ihr Langzeitverhalten untersucht. Durch die Untersuchung des Langzeitverhaltens erhält man Aufschlüsse über zeitliche Veränderungen des Anlagenzustandes. Darüber hinaus werden die in den Neuronetzen 1 - 3 gespeicherten Informationen der verschiedenen Walzwerke miteinander verglichen. Bei gleicher Physik müssen auch die durch die Neuronetze gebildeten Realmodelle 1 - 3 zumindest ähnlich sein. Sind Abweichungen der Realmodelle 1 - 3 untereinander zu erkennen, so lassen sich diese den betreffenden Einflussgrößen zuordnen. Dies ermöglicht eine Identifikation von Störgrößen. Bei nicht optimalem oder fehlerhaftem Verhalten der Prozesssteuerung lassen sich damit die Ursachen schneller lokalisieren. Eine auf diese Weise vorgenommene Überwachung des aktuellen Anlagenzustandes ermöglicht schnelle Reaktionszeiten, wodurch Stillstandszeiten verkürzt werden.

Das in FIG 2 dargestellte Referenzmodell B umfasst im dargestellten Ausführungsbeispiel ein physikalisches Modell 9 und ein neuronales Modellkorrekturnetz 10.

Im physikalischen Modell 9 wird aus einer Eingangsgröße eines realen technologischen Prozesses (z.B. Prozesse in Walzwerken) eine Ausgangsgröße gebildet.

Im neuronalen Modellkorrekturnetz 10 wird aus dieser Eingangsgröße ein Korrekturwert gebildet. Durch diesen Korrekturwert wird die im physikalischen Modell 9 gebildete Ausgangsgröße korrigiert.

Durch den Einsatz des neuronalen Modellkorrekturnetzes 10 ist das Referenzmodell 8 selbstlernend.

Das in FIG 3 gezeigte Verfahren zur Ferndiagnose eines technologischen Prozesses umfasst ein Diagnosetool, das aus Sicht der Software aus einem C/C⁺⁺-Server und einem JAVA-Client besteht. Die Kommunikation zwischen diesen getrennten Software-Komponenten erfolgt über das weltweit standardisierte Kommunikationssystem CORBA (Common Object Request Broker Architecture). Der C/C⁺⁺-Server läuft im Kundennetzwerk und kopiert die entsprechenden Neuronetze (Realmodelle, die den technologischen Prozess darstellen) vom Prozessrechner. Zur Reduzierung des zu übertragenden Datenvolumens analysiert und verwaltet der C/C⁺⁺-Server die Neuronetze lokal im eigenen System. Der JAVA-Client übernimmt dabei die Visualisierung der Daten.

Der Vorteil dieses Konzeptes besteht in der Netzwerkfähigkeit, d.h. C/C⁺⁺-Server und JAVA-Client sind über CORBA entkoppelt und können deshalb auf verschiedenen Rechnern laufen. Mehrere JAVA-Clients können somit gleichzeitig auf einen zentralen C/C⁺⁺-Server zugreifen, der auf einem separaten Rechner läuft. Damit besteht z.B. die Möglichkeit, von jedem Ort aus bei vorhandener Netzwerkanbindung das Diagnosesystem zu nutzen und das Verfahren zur Ferndiagnose durchzuführen. Die Verbindung zum Prozessrechner des Walzwerkes wird über ISDN-Verbindungen hergestellt. Da die gleichen Diagnosetools sowohl vor Ort (z.B. im Walzwerk) als auch beim Hersteller der Prozessanlage eingesetzt werden kann, ist eine Ferndiagnose problemlos möglich und der Anwender vor Ort und der Hersteller können besser anhand gleicher Daten kommunizieren.

Zur Analyse der Realmodelle (Neuronetze) werden alle Eingangs-, Ausgangsabhängigkeiten berechnet und grafisch dargestellt. Dies ermöglicht die Kontrolle der Sensitivität und Auflösung des Realmodells bezüglich ausgewählter Inputs. Bei einem nicht optimalen Verhalten der Prozesssteuerung kann geprüft werden, ob Störeinflüsse vorhanden sind, von welchen Einflussgrößen diese abhängen und wie das Langzeitverhalten der Realmodelle ist. Hierdurch verkürzen sich die Zeiten zur Fehlersuche und somit die Stillstandszeiten der Prozessanlage. Außerdem geben die vom Neuronetz gelernten Zusammenhänge Aufschlüsse über den technologischen Prozess und die diesem Prozess zugrundeliegende Physik.

## Patentansprüche

1. Verfahren zur Ferndiagnose eines technologischen Prozesses, das folgende Merkmale umfasst:
- Wenigstens ein realer technologischer Prozess wird durch wenigstens ein Realmodell (1 - 3) dargestellt,
- wenigstens ein Realmodell (1 - 3) wird mit wenigstens einem Referenzmodell (8) wenigstens eines technologischen Referenzprozesses verglichen, wobei
- aus diesem Vergleich wenigstens eine Bewertung des realen technologischen Prozesses abgeleitet wird.

2. Verfahren nach Anspruch 1, das folgendes weitere Merkmal aufweist:
- aus dem Vergleich wenigstens zweier Realmodelle (1 - 3) miteinander wird wenigstens eine Bewertung des realen technologischen Prozesses abgeleitet.

3. Verfahren nach Anspruch 1 oder 2, das folgendes weitere Merkmal aufweist:
- Wenigstens ein Realmodell (1 - 3) wird von wenigstens einem Neuronetz gebildet.

4. Verfahren nach einem der Ansprüche 1 bis 3, das folgendes weitere Merkmal aufweist:
- Wenigstens ein Referenzmodell (1 - 3) wird in einem Neuronetz aus wenigstens einem realen technologischen Prozess gebildet.

5. Verfahrens nach einem der Ansprüche 1 bis 3, das folgendes weitere Merkmal aufweist:
- Wenigstens ein Referenzmodell (8) wird von wenigstens einem theoretischen Modell wenigstens eines realen technologischen Prozesses gebildet.

6. Verfahren nach einem der Ansprüche 1 - 4, das folgende weitere Merkmale aufweist:
- Wenigstens ein Referenzmodell (8) umfasst wenigstens ein physikalisches Modell (9) und wenigstens ein neuronales Modellkorrekturnetz (10), wobei
- im physikalischen Modell (9) aus wenigstens einer Eingangsgröße wenigstens eines realen technologischen Prozesses wenigstens eine Ausgangsgröße gebildet wird, die vom neuronalen Modellkorrekturnetz korrigiert wird.

7. verfahren nach Anspruch 6, das folgendes weitere Merkmal aufweist:
- Im neuronalen Modellkorrekturnetz (10) wird aus wenigstens einer Eingangsgröße wenigstens eines realen technologischen Prozesses wenigstens ein Korrekturwert gebildet, welcher die vom physikalischen Modell (9) aus dieser Eingangsgröße gebildete Ausgangsgröße korrigiert.

8. Verfahren nach Anspruch 1 oder 2, das folgendes weitere Merkmal aufweist:
- Wenigstens ein Realmodell (1 - 3) und/oder wenigstens ein Referenzmodell (8) ist Bestandteil der Prozessanlage.

9. Verfahren nach Anspruch 1 oder 2, das folgendes weitere Merkmal aufweist:
- Die Bewertung des realen technologischen Prozesses umfasst eine Analyse des Langzeitverhaltens wenigstens eines beteiligten Realmodells (1 - 3).

10. Verfahren nach Anspruch 4 oder 9, das folgendes weitere Merkmal aufweist:
- Die Bewertung des realen technischen Prozesses umfasst eine Analyse des Langzeitverhaltens wenigstens eines beteiligten Referenzmodells (8), das aus wenigstens einem realen technologischen Prozess gebildet wird.

## Claims

1. Method for the remote diagnosis of a technological process, which comprises the following features:
- at least one real technological process is represented by at least one real model (1 - 3),
- at least one real model (1 - 3) is compared with at least one reference model (8) of at least one technological reference process,
- at least one assessment of the real technological process being derived from this comparison.

2. Method according to Claim 1, which has the following further feature:
- at least one assessment of the real technological process is derived of at least two real models (1 - 3) with each other.

3. Method according to Claim 1 or 2, which has the following further feature:
- at least one real model (1 - 3) is formed by at least one neural network.

4. Method according to one of Claims 1 to 3, which has the following further feature:
- at least one reference model (1 - 3) is formed in a neural network from at least one real technological process.

5. Method according to one of Claims 1 to 3, which has the following further feature:
- at least one reference model (8) is formed by at least one theoretical model of at least one real technological process.

6. Method according to one of Claims 1 - 4, which has the following further features:
- at least one reference model (8) comprises at least one physical model (9) and at least one neural model correction network (10),
- in the physical model (9), at least one input variable from at least one real technological process being used to form at least one output variable, which is corrected by the neural model correction network.

7. Method according to Claim 6, which has the following further feature:
- in the neural model correction network (10), at least one input variable from at least one real technological process is used to form at least one correction value, which corrects the output variable formed from this input variable by the physical model (9).

8. Method according to Claim 1 or 2, which has the following further feature:
- at least one real model (1 - 3) and/or at least one reference model (8) is a constituent part of the process plant.

9. Method according to Claim 1 or 2, which has the following further feature:
- the assessment of the real technological process comprises an analysis of the long-term behaviour of at least one real model (1 - 3) involved.

10. Method according to Claim 4 or 9, which has the following further feature:
- the assessment of the real technological process comprises an analysis of the long-term behaviour of at least one reference model (8) involved, which is formed from at least one real technological process.

## Revendications

1. Procédé pour le diagnostic à distance d'un processus technique, comprenant les caractéristiques suivantes :
- on représente au moins un processus technique réel par au moins un modèle réel (1 à 3),
- on compare au moins un modèle réel (1 à 3) à au moins un modèle de référence (8) d'au moins un processus technique de référence,
- au moins une évaluation du processus technique réel on déduit de cette comparaison.

2. Procédé selon la revendication 1, comprenant l'autre caractéristique suivante :
- à partir de la comparaison d'au moins deux modèles réels (1 à 3) entre eux, on déduit au moins une évaluation du processus technique réel.

3. Procédé selon la revendication 1 ou 2, comprenant l'autre caractéristique suivante :
- on forme au moins un modèle réel (1 à 3) par au moins un réseau neuronal.

4. Procédé selon l'une des revendications 1 à 3, comprenant l'autre caractéristique suivante :
- on forme au moins un modèle de référence (1 à 3) dans un réseau neuronal à partir d'au moins un processus technique réel.

5. Procédé selon l'une des revendications 1 à 3, comprenant l'autre caractéristique suivante :
- on forme au moins un modèle de référence (8) par au moins un modèle théorique d'au moins un processus technique réel.

6. Procédé selon l'une des revendications 1 à 4, comprenant les autres caractéristiques suivantes :
- au moins un modèle de référence (8) comprend au moins un modèle physique (9) et au moins un réseau neuronal de correction de modèle (10), et
- dans le modèle physique (9), on forme à partir d'au moins une grandeur d'entrée d'au moins un processus technique réel au moins une grandeur de sortie qui est corrigée par le réseau neuronal de correction de modèle.

7. Procédé selon la revendication 6, comprenant l'autre caractéristique suivante :
- dans le réseau neuronal de correction de modèle (10), on forme à partir d'au moins une grandeur d'entrée d'au moins un processus technique réel au moins une valeur correctrice qui corrige la grandeur de sortie formée par le modèle physique (9) à partir de cette grandeur d'entrée.

8. Procédé selon la revendication 1 ou 2, comprenant l'autre caractéristique suivante :
- au moins un modèle réel (1 à 3) et/ou au moins un modèle de référence (8) font partie de l'installation industrielle.

9. Procédé selon la revendication 1 ou 2, comprenant l'autre caractéristique suivante :
- l'évaluation du processus technique réel comprend une analyse du comportement à long terme d'au moins un modèle réel (1 à 3) concerné.

10. Procédé selon la revendication 4 ou 9, comprenant l'autre caractéristique suivante :
- l'évaluation du processus technique réel comprend une analyse du comportement à long terme d'au moins un modèle de référence (8) concerné qui est formé à partir d'au moins un processus technique réel.
